# EUROPÄISCHE PATENTANMELDUNG

(11) **EP 4 425 013 A1**
(43) Veröffentlichungstag der Anmeldung: **04.09.2024**
(21) Anmeldenummer: 23159105.8
(22) Anmeldetag: 28.02.2023
(51) Int. Cl.: F16H 55/08, F03D 15/00, F16H 55/17, F16H 55/26

(54) **ZAHN FÜR EINE VERZAHNTE DREHMOMENTÜBERTRAGUNGSANORDNUNG UND VERFAHREN ZUR HERSTELLUNG EINES DERARTIGEN ZAHNS**

(71) Anmelder: Flender GmbH, 46395 Bocholt (DE)
(72) Erfinder: JACOB, Thomas, 46395 Bocholt (DE); DÜNCK-KERST, Klaus, 46395 Bocholt (DE); VRIESEN, Johanens, 46395 Bocholt (DE)
(74) Vertreter: Michalski Hüttermann & Partner Patentanwälte mbB

(57) **Zusammenfassung**

Es ist ein Zahn (10) für eine verzahnte Drehmomentübertragungsanordnung vorgesehen, mit einer Zahnflanke (18) zum Drehmomentaustausch mit einer Gegenflanke eines Verzahnungspartners, wobei die Zahnflanke (18) eine periodische verlaufende Zahnflankenkorrektur (22) mit einer örtlich verlaufenden Periodenlänge T aufweist, wobei die periodische Zahnflankenkorrektur (22) mit einer räumlichen Mikrostruktur (26) überlagert ist, wobei ein lokales örtliches Maximum (28) zu einem nächst liegendem lokalem Minimum (30) einen Abstand t von t < T/2 aufweist. Durch die Erhöhung des weißen Rauschens im vom Zahn (10) abgestrahlten Körperschall mit Hilfe der Mikrostrukturen (26) ist eine Reduzierung von für den Menschen störenden Geräuschemissionen in Drehmomentübertragungseinrichtungen ermöglicht.

## Beschreibung

Die Erfindung betrifft einen Zahn für eine verzahnte Drehmomentübertragungsanordnung sowie ein Verfahren zur Herstellung eines derartigen Zahns, mit dessen Hilfe ein Verzahnungseingriff in der Drehmomentübertragungsanordnung, insbesondere ein Windkraftgetriebe, geräuschverbessert erfolgen kann. Die Erfindung betrifft ferner ein Verzahnungselement mit einem derartigen Zahn, ein Windkraftgetriebe mit einem derartigen Zahn und/oder einem derartigen Verzahnungselement, ein Computerprogrammprodukt zur Durchführung des Verfahrens sowie ein Datenagglomerat zur additiven Fertigung und/oder Simulation des Zahns und/oder des Verzahnungselements.

Aus EP 2 774 709 A2 ist es bekannt einen genormten Zahn einer Zahnradpaarung an dessen Zahnflanke mit einer periodischen Welligkeit zu versehen, um einen durch Unregelmäßigkeiten im Zahneingriff der Zahnradpaarung unter Last entstehende Schwingungen zu reduzieren, wodurch eine Gleichförmigkeit im Zahneingriff erhöht wird und Laufgeräusche reduziert werden.

Es besteht ein ständiges Bedürfnis für den Menschen störende Geräuschemissionen in Drehmomentübertragungseinrichtungen, insbesondere Getrieben, zu reduzieren.

Es ist die Aufgabe der Erfindung Maßnahmen aufzuzeigen, die eine Reduzierung von für den Menschen störenden Geräuschemissionen in Drehmomentübertragungseinrichtungen ermöglichen.

Die Lösung der Aufgabe erfolgt durch einen Zahn mit den Merkmalen des Anspruchs 1, ein Verzahnungselement mit den Merkmalen des Anspruchs 8, ein Haltewerkzeug mit den Merkmalen des Anspruch 9, ein Windkraftgetriebe mit den Merkmalen des Anspruchs 10, ein Verfahren mit den Merkmalen des Anspruchs 11, ein Computerprogrammprodukt mit den Merkmalen des Anspruchs 14 und ein Datenagglomerat mit den Merkmalen des Anspruchs 15. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann, wobei der Schutzbereich der Erfindung durch die unabhängigen Ansprüche definiert wird.

Ein Aspekt der Erfindung betrifft einen Zahn für eine verzahnte Drehmomentübertragungsanordnung, mit einer Zahnflanke zum Drehmomentaustausch mit einer Gegenflanke eines Verzahnungspartners, wobei die Zahnflanke eine periodische verlaufende Zahnflankenkorrektur mit einer örtlich verlaufenden Periodenlänge T aufweist, wobei die periodische Zahnflankenkorrektur mit einer räumlichen Mikrostruktur überlagert ist, wobei die Mikrostruktur lokale Maxima und/oder lokale Minima sowie einen kürzester Abstand t von t < T/2 zwischen den lokalen Maximum und/oder dem lokalen Minima aufweist

Die periodisch verlaufende Zahnflankenkorrektur kann insbesondere eine gemäß ISO 21771 [:2007] genormte Zahnflankenkorrektur darstellen, die vorzugsweise eine sinusförmige Welligkeit entlang der Oberfläche der Zahnflanke ausformt. Diese, in der Regel normgemäße, Zahnflankenkorrektur wird jedoch zusätzlich mit der Mikrostruktur überlagert, die sich jedoch der periodischen Zahnflankenkorrektur unterordnet. Durch die Mikrostruktur wird die periodische Zahnflankenkorrektur nicht unkenntlich gemacht, sondern bleibt gut erkennbar erhalten. Vorzugsweise kann die Mikrostruktur im Rahmen der für diese Zahnflankenkorrektur vorgesehenen Toleranzfelder zusätzlich Berge und Täler in der sich ansonsten ergebenen im Wesentlichen dreidimensional verlaufenden aber in der abgewickelten Darstellung grundsätzlich ebenen Fläche der Zahnflankenkorrektur ausformen. Diese Berge und Täler der Mikrostruktur sind insbesondere so stark ausgeprägt, dass sie größer als eine vorgesehene Rauigkeit sind. Gleichzeitig ist es möglich die Berge und Täler der Mikrostruktur so gering auszuprägen, dass Randbedingungen für die Formgestaltung von nach ISO 21771 [:2007] zulässigen Zahnflankenkorrektur nicht verletzt werden. Insbesondere sind durch die Überlagerung der Zahnflankenkorrektur mit der Mikrostruktur die Anforderungen an die Tragfähigkeit des Zahns nach ISO 6336 eingehalten. Bei einem Vergleich eines Schnittbildes eines Zahns mit Zahnflankenkorrektur und mit Mikrostrukturen mit einem Schnittbildes eines ansonsten identischen Zahns mit der identischen Zahnflankenkorrektur aber ohne Mikrostrukturen, ergibt sich für den Oberflächenverlauf in der Schnittebene für den Zahn mit Mikrostrukturen ein stärker unregelmäßiger, insbesondere zittriger, Verlauf, vergleichbar zu einer Interferenz von sich überlagernden Wellen.

In einer unabhängigen Erfindung handelt es sich bei der Zahnflankenkorrektur nicht um eine periodische verlaufende Zahnflankenkorrektur, die genau eine örtlich verlaufenden Periodenlänge T aufweist, sondern um eine nach ISO 21771 [:2007] zulässigen Zahnflankenkorrektur, bei der es sich insbesondere nicht ausschließlich um eine periodische verlaufende Zahnflankenkorrektur, die genau eine örtlich verlaufenden Periodenlänge T aufweist, handeln muss. Die vorgesehene Zahnflankenkorrektur kann auch eine nichtperiodische Zahnflankenkorrektur sein und insbesondere eine beliebige der in ISO 21771[:2007] beschriebene Formgestaltung aufweisen. Die Mikrostruktur kann also eine beliebige nach ISO 21771[:2007] definierte Zahnflankenkorrektur überlagern. Diese unabhängige Erfindung betrifft insbesondere einen Zahn für eine verzahnte Drehmomentübertragungsanordnung, mit einer Zahnflanke zum Drehmomentaustausch mit einer Gegenflanke eines Verzahnungspartners, wobei die Zahnflanke eine Zahnflankenkorrektur nach ISO 21771[:2007] aufweist, wobei die Zahnflankenkorrektur mit einer räumlichen Mikrostruktur überlagert ist, wobei insbesondere die Mikrostruktur lokale Maxima und/oder lokale Minima sowie einen kürzester Abstand t zwischen den lokalen Maximum und/oder einem lokalen Minima aufweist, wobei die Zahnflanke zwischen einem Fuß des Zahns und einem Kopf des Zahns entlang einer Flächennormale des Kopf eine Höhe H aufweist, wobei 0,00001≤ t/H ≤ 0,10, insbesondere 0,0001≤ t/H ≤ 0,05, vorzugsweise 0,0005≤ t/H ≤ 0,01 und besonders bevorzugt 0,001≤ t/H ≤ 0,005 gilt. Diese Ausführungsform kann wie vorstehend und/oder nachstehend erläutert aus- und weitergebildet sein.

In einer weiteren unabhängigen Erfindung ist keine Zahnflankenkorrektur vorgesehen. Die Mikrostruktur kann dadurch unmittelbar eine für eine Verzahnung vorgesehene Grundform der Zahnflanke überlagern, ohne dass diese Grundform durch eine Zahnflankenkorrektur nach ISO 21771[:2007] abgewandelt wurde. Die Zahnflanke in dieser Ausführungsform beruht insbesondere auf einer geradeverzahnten oder schrägverzahnten Grundform des Zahns für eine Evolventenverzahnung oder einer Zykloidenverzahnung. Diese unabhängige Erfindung betrifft insbesondere einen Zahn für eine verzahnte Drehmomentübertragungsanordnung, mit einer Zahnflanke zum Drehmomentaustausch mit einer Gegenflanke eines Verzahnungspartners, wobei die Zahnflanke auf einer für eine Verzahnung, insbesondere Evolventenverzahnung oder Zykloidenverzahnung, vorgesehenen Grundform beruht, wobei die Grundform von einer räumliche Mikrostruktur überlagert ist, wobei insbesondere durch lokale Maxima und/oder lokale Minima ein sich wiederholendes Muster von der Mikrostruktur ausgebildet ist, wobei vorzugsweise die lokalen Maxima und/oder lokalen Minima, insbesondere alternierend, schachbrettartig in Zeilen und Spalten angeordnet sind. Diese Ausführungsform kann wie vorstehend und/oder nachstehend erläutert aus- und weitergebildet sein.

Es wurde erkannt, dass durch die genormte, periodische Zahnflankenkorrektur zwar der Schalldruck bzw. der Schalldruckpegel reduziert werden kann, dass aber die verbliebenen Frequenzen in dem abgestrahlten Körperschall bei einem Verzahnungseingriff unter Last während einer Drehmomentübertragung in der verzahnten Drehmomentübertragungsanordnung sehr klar und für den Menschen deutlich hörbar hervortreten können. Durch die Mikrostrukturen können, die bei einer bestimmten Zahnflankenkorrektur auftretenden Haupt-Frequenzen im abgestrahlten Körperschall verwaschen werden und/oder zusätzliche Neben-Frequenzen erzeugt werden, so dass die Hauptfrequenzen nicht mehr so klar und eindeutig hervortreten. Durch die Mikrostrukturen wird dadurch vorrangig der Anteil an weißem Rauschen ("white noise") im abgestrahlten Körperschall erhöht und in einem eher geringen Ausmaß, sofern überhaupt, der Schalldruck des abgestrahlten Körperschalls verringert. Es wurde erkannt, dass eine Erhöhung des weißen Rauschens das Empfinden einer bestimmten Frequenz als Lärm im Gehör eines Menschen maskieren und überdecken kann. Obwohl sich der Schalldruck im abgestrahlten Körperschall kaum geändert hat, kann durch das Verwaschen des Hauptfrequenzen und das Erhöhen des weißen Rauschens das Lärmempfinden im menschlichen Gehör beeinflusst werden, so dass ein von Zähnen mit Zahnflankenkorrektur aber ohne Mikrostrukturen abgestrahlter Körperschall von einem Menschen als störender Lärm empfunden werden kann, während ein von Zähnen mit Zahnflankenkorrektur und mit Mikrostrukturen abgestrahlter Körperschall trotz vergleichbarem Schalldruck nicht mehr als störender Lärm empfunden wird. Durch die Formgestaltung der Mikrostruktur, insbesondere durch die Wahl der Abstände von Maxima und/oder Minima sowie deren Höhe beziehungsweise Tiefe, können die sowieso auftretenden Haupt-Frequenzen verändert und/oder maskiert werden und/oder bestimmte Frequenzen beziehungsweise Frequenzbereiche mit einer definierten Bandbreite bewusst erzeugt werden, wodurch das Ausmaß an weißem Rauschen im abgestrahlten Körperschall erhöht werden kann. Durch die Erhöhung des weißen Rauschens im vom Zahn abgestrahlten Körperschall mit Hilfe der Mikrostrukturen ist eine Reduzierung von für den Menschen störenden Geräuschemissionen in Drehmomentübertragungseinrichtungen ermöglicht.

Der Zahn kann ein, vorzugsweise einstückiger, Teil eines Zahnrads, einer Zahnstange oder sonstigen Bauteils sein, das in einem verzahnten Zustand ein Drehmoment mit dem mit diesem Zahn verzahnten Verzahnungspartner austauschen kann. Der Zahn weist in der Regel einen mit einem Grundkörper verbundenen Fuß und einen von dem Grundkörper wegweisenden Kopf auf, wobei der Fuß und der Kopf über die zur Drehmomentübertragung in eine bestimmte Richtung vorgesehene Zahnflanke verbunden ist. Insbesondere sind zwei in unterschiedliche Richtungen wirkende Zahnflanken vorgesehen sein, die in der jeweiligen Richtung ein Drehmoment mit dem Verzahnungspartner austauschen können. Vorzugsweise weist der Verzahnungspartner ebenfalls mindestens einen erfindungsgemäß ausgestalteten Zahn auf. Der Fuß und der Kopf können über nicht zur Drehmomentübertragung vorgesehene Stirnseiten miteinander verbunden sein. Besonders bevorzugt ist nur an denjenigen Zahnflanken die periodische verlaufende Zahnflankenkorrektur und die räumliche Mikrostruktur ausgeformt, an der im designierten Anwendungsfall auch ein Austausch eines Drehmoments erfolgt, so dass ein unnötiger Bearbeitungsaufwand eingespart werden kann.

Die Zahnflankenkorrektur ist eine bewusste Abweichung der Zahnform des Zahns, der ohne Zahnflankenkorrektur auf einem für eine bestimmte Verzahnungsart, beispielsweise Evolventenverzahnung oder Zykloidenverzahnung, vorgesehenen Grundform beruht. Unter einer Zahnflankenkorrektur wird insbesondere eine Verzahnungsmodifikationen verstanden, wie sie in ISO21771[:2007] vorgestellt und genormt ist. Die Zahnflankenkorrektur zeichnet sich durch eine Formgestaltung aus, die durch eine vergleichsweise einfache mathematische Formel, beispielsweise eine Sinus-Funktion oder Polynom-Funktion, beschrieben werden kann. Beispielsweise ist die Verzahnungsmodifikationen bezogen auf eine abgewickelte Darstellung der Grundform des Zahns ("Zahnflankenabwicklung") als eine Wellenform ausgestaltet, die eine konstante Periodendauer beziehungsweise Frequenz und eine konstante Amplitude aufweist, wodurch die Wellenform durch eine einfache Sinusfunktion beschrieben werden kann. Die als Wellenform ausgestaltete Verzahnungsmodifikationen erstreckt sich insbesondere entlang einer geraden Ausbreitungsrichtung, die in der abgewickelten Darstellung der Grundform des Zahns nicht gebogen und nicht diskontinuierlich verläuft.

Quer zur Ausbreitungsrichtung ist die Wellenform in allen Schnittansichten in der abgewickelten Darstellung der Grundform des Zahns in der Regel identisch ausgeformt.

Die Mikrostruktur kann bezogen auf eine abgewickelte Darstellung der sich nach der Zahnflankenkorrektur ergebenen Form des Zahns ("Zahnflankenkorrekturabwicklung") eine Mehrzahl an örtlich verteilten lokalen Maxima und Minima aufweisen, die regelmäßig aber vorzugsweise unregelmäßig zueinander angeordnet sind. Bezogen auf die Zahnflankenkorrekturabwicklung können die Maxima und Minima unterschiedliche Abstände bzw. Auslenkungen aufweisen und/oder können unterschiedlich große Abstände aufweisen. Vorzugsweise sind die Maxima und die Minima der Mikrostruktur im Gegensatz zu einer als Wellenform ausgestalteten Zahnflankenkorrektur nicht nur in einer Ausbreitungsrichtung, sondern in beide Flächenrichtungen der Zahnflanke angeordnet. Die Mikrostruktur kann insbesondere eine zweidimensionale Topologie bezogen auf die Zahnflankenkorrekturabwicklung ausbilden. Die die Maxima und Minima der Mikrostruktur sind insbesondere großflächiger und/oder bezüglich ihrer Auslenkung zu der Zahnflankenkorrekturabwicklung größer als eine typische Rauigkeit, die sich nach der Erzeugung der Zahnflankenkorrektur ergibt. Die Mikrostruktur stellt keine sich nach der Erzeugung automatisch ergebene Rauigkeit der Zahnflankenkorrektur dar, sondern ist durch ein weiteres Bearbeitungsverfahren zusätzlich zu der Erzeugung der Zahnflankenkorrektur bewusst herbeigeführt. Das zur Erzeugung der Mikrostruktur verwendete Bearbeitungsverfahren kann jedoch durchaus eine willkürliche beziehungsweise stochastisch verteilte Anordnung von Maxima und/oder Minima erreichen und/oder eine geringere Rauigkeit als das zur Erzeugung der Zahnflankenkorrektur verwendete Bearbeitungsverfahren erreichen. Insbesondere ist bei der Mikrostruktur vorgesehen, dass ein lokales örtliches Maximum zu einem nächst liegendem lokalem Minimum und/oder zu einem nächst liegendem lokalem Maximum einen Abstand t aufweist und die Zahnflanke zwischen einem Fuß des Zahns und einem Kopf des Zahns entlang einer Flächennormale des Kopfs eine Höhe H aufweist, wobei 0,00001≤ t/H ≤ 0,10, insbesondere 0,0001≤ t/H ≤ 0,05, vorzugsweise 0,0005≤ t/H ≤ 0,01 und besonders bevorzugt 0,001≤ t/H ≤ 0,005 gilt.

Der Abstand t ist durch einen minimalen Abstand von Extremwerten der Mikrostruktur definiert, wobei es sich bei den betrachteten Extremwerten um Maxima und/oder Minima handeln kann. Bei einer alternierenden Anordnung von Maxima und Minima ist der Abstand t durch den Abstand der tiefsten Stelle des Minimums und die höchste Stelle des benachbarten Maximums definiert. Es ist aber auch möglich, dass bezogen auf eine Abwicklung der Grundform des Zahns beziehungsweise der Zahnflankenkorrektur zwei Maxima und/oder zwei Minima hintereinander angeordnet sind. In diesem Fall ist der Abstand t durch den Abstand der höchsten Stelle der beiden benachbarten Maxima beziehungsweise durch den Abstand der tiefsten Stelle der beiden benachbarten Minima definiert. Bei Formgestaltungen der Mikrostruktur, bei denen das Maximum und/oder das Minimum nicht durch einen einzelnen Punkt, sondern ein Plateau, eine Linie oder Ähnliches ausgebildet ist, ist der Abstand t durch die kürzestes Strecke entlang einer Gerade, welche zumindest zwei Punkte des Maximums beziehungsweise des Minimums über einen Höhenunterschied hinweg verbindet.

Der Abstand t ist insbesondere kleiner als eine zu erwartende Verformung des Zahns unter Last. Vorzugsweise ist der Abstand t um mindestens eine Zehnerpotenz kleiner als eine zu erwartende Verformung des Zahns unter Last. Insbesondere gilt 0,5 µm ≤ t ≤ 25 µm, vorzugsweise 1 µm ≤ t ≤ 20 µm, weiter bevorzugt 5 µm ≤ t ≤ 15 µm und besonders bevorzugt 8 µm ≤ t ≤ 12 µm, beispielsweise t = 10 µm ± 1 µm.

Insbesondere gilt 0,00005 ≤ t/T ≤ 0,49, insbesondere 0,0001 ≤ t/T ≤ 0,05, bevorzugt 0,0005 ≤ t/T ≤ 0,01 und besonders bevorzugt 0,001 ≤ t/T ≤ 0,005. Dadurch können sich innerhalb einer einzigen Periodendauer T der Zahnflankenkorrektur sich um den Faktor fünf, zehn oder noch mehr lokale Maxima und/oder Minima der Mikrostruktur befinden. Dadurch lassen sich von einem Menschen hörbare Schwebungen im abgestrahlten Körperschall vermeiden und das Ausmaß an weißen Rauschen erhöhen.

Vorzugsweise weist die Zahnflankenkorrektur eine Amplitude A in Richtung einer Flächennormalen der Zahnflanke und die Mikrostruktur zu einer Mittellinie der Zahnflankenkorrektur eine Auslenkung a in Richtung einer Flächennormalen der Zahnflanke auf, wobei 0,00005 ≤ a/A ≤ 0,50, insbesondere 0,0001 ≤ a/A ≤ 0,10, bevorzugt 0,0005 ≤ a/A ≤ 0,05 und besonders bevorzugt 0,001 ≤ a/A ≤ 0,01 gilt. Die Auslenkung der Mikrostruktur, also die Höhe des lokalen Maximums und/oder die Tiefe des lokalen Minimums, im Vergleich zu der Zahnflankenkorrekturabwicklung ist dadurch klein, so dass der technische Effekt der Zahnflankenkorrektur nicht beeinträchtigt wird. Außerdem können die Minima der Mikrostruktur so klein sein, dass ein Schmierstoff, insbesondere Schmieröl, leicht durch Adhäsion und/oder Kapillareffekte an der Zahnflanke haften können. Unter Last können die Maxima der Mikrostruktur elastisch verformt werden, wodurch ein Dämpfungseffekt und eine erhöhte Laufruhe erreicht werden können.

Die Mikrostruktur kann zu einer Zahnflankenkorrekturabwicklung und/oder zu einer Zahnflankenabwicklung die/eine Auslenkung a in Richtung einer Flächennormalen der Zahnflanke aufweisen, wobei insbesondere die Auslenkung a kleiner als eine zu erwartende Verformung des Zahns unter Last ist. Vorzugsweise ist die Auslenkung a um mindestens eine Zehnerpotenz kleiner als eine zu erwartende Verformung des Zahns unter Last. Insbesondere gilt 0,5 µm ≤ a ≤ 25 µm, vorzugsweise 1 µm ≤ a ≤ 20 µm, weiter bevorzugt 5 µm ≤ a ≤ 15 µm und besonders bevorzugt 8 µm ≤ a ≤ 12 µm, beispielsweise a = 10 µm ± 1 µm. Durch den Abstand a zur jeweiligen abgewickelten Fläche wird die Maxima Höhe eines Maximums und/oder die maximale Tiefe eines Minimums zur abgewickelten Fläche als Referenzhöhe.

Besonders bevorzugt ist vorgesehen, dass die Zahnflankenkorrektur und die Mikrostruktur sich sowohl in Breitenrichtung als auch in Längsrichtung der Zahnflanke, insbesondere der gesamten Zahnflanke, flächig gleichartig erstrecken. Voneinander abgrenzbare Teilflächen der Zahnflanke, die sich beispielsweise durch ein unterschiedliches Reflektionsverhalten von Licht voneinander unterscheiden lassen, sind dadurch vermieden. Dadurch kann verhindert werden, dass durch einen sprungartigen Wechsel der Oberflächenbeschaffenheit zwischen zwei Teilbereichen der Zahnflanke vorab nur schwer vorhersagbare Effekte auf das Geräuschverhalten auftreten.

Insbesondere ist ein Verlauf der Mikrostruktur über die Zahnflankenkorrektur aperiodisch, insbesondere willkürlich und/oder stochastisch verteilt, ausgeformt. Durch die nicht periodische Verteilung der Maxima und Minima der Mikrostruktur kann eine durch die Mikrostruktur selbst verursachte Schwingung, die zu einem hörbaren abgestrahlten Körperschall führen könnte, vermieden werden. Stattdessen kann das Ausmaß an weißem Rauschen erhöht werden.

Vorzugsweise ist vorgesehen, dass bei einem Vergleich eines Zahns mit Mikrostrukturen mit einem ansonsten identischen Zahn ohne Mikrostrukturen eine Fast-Fourier-Transformation ("FFT") eines von dem Zahn mit Mikrostrukturen abgegeben Körperschalls bei einer ansonsten identischen Drehmomentübertragung in derselben verzahnten Drehmomentübertragungsanordnung im Bildbereich der Fast-Fourier-Transformation eine größere Bandbreite der Frequenzmaxima aufweist. Durch die größere Bandbreite sind bei dem Zahn mit Mikrostruktur die niedrigeren und höheren benachbarten umgebenden Frequenzlinien, beispielsweise in einem Frequenzbereich +/- 100 Hz, des betrachteten Frequenzmaxima der Haupt-Frequenz angehoben, so dass eine Maskierung auf der linken und rechten Seite des Frequenzmaxima erhöht ist. Zusätzlich oder alternativ sind durch die Mikrostruktur zu den auch ohne Mikrostruktur auftretenden Haupt-Frequenzen zusätzliche Neben-Frequenzen erzeugt, wobei insbesondere die Amplitude der Neben-Frequenz deutlich, beispielsweise um eine Zehnerpotenz, kleiner als die Amplitude der im Bildbereich nächsten Haupt-Frequenz ist. Insbesondere weist auch die Neben-Frequenz eine größere Bandbreite als die Haupt-Frequenz ohne Mikrostruktur auf. Ohne Mikrostruktur ergeben sich in dem vom Zahn unter Last abgestrahlten Körperschall diskrete einander überlagernde Frequenzen, die jeweils im Bildbereich der FFT als ein sehr schmaler Amplituden-Peak bei einer bestimmten Frequenz mit einer allenfalls nur sehr kleinem Bandbreite der Frequenz erscheinen. Durch die Mikrostrukturen kann jedoch diese Frequenz verwaschen werden, so dass sich die Bandbreite der Frequenz verbreitert und sich leichte Abweichungen dieser Frequenz ergeben. Die ursprüngliche Haupt-Frequenz, die immer noch das Maximum der jeweiligen Bandbreite darstellt, ist dadurch weniger trennscharf und stärker verrauscht. Die jeweilige Frequenz wird dadurch von dem menschlichen Gehör als weniger störend wahrgenommen.

Besonders bevorzugt beruht die Zahnflanke auf einer geradeverzahnten oder schrägverzahnten Grundform für eine Evolventenverzahnung oder einer Zykloidenverzahnung. Die Überlagerung der Zahnflankenkorrektur mit der Mikrostruktur kann auf einer Vielzahl unterschiedlicher Grundformen des Zahns angewendet werden. Eine Beschränkung auf eine bestimmte Grundform des Zahns ist nicht erforderlich.

Ein weiterer Aspekt der Erfindung betrifft ein Verzahnungselement, insbesondere Zahnrad oder Zahnstange, für eine verzahnte Drehmomentübertragungsanordnung mit einer Mehrzahl an Zähnen, die wie vorstehend beschrieben aus- und weitergebildet sein können. Vorzugsweise sind mindestens zwei Zähne unterschiedlich zueinander ausgeformt. Insbesondere ist vorgesehen, dass für mindestens eine Zahnflanke verschiedener Zähne bezüglich ihres Abstands t und/oder ihrer Auslenkung a unterschiedlich ausgeformte Mikrostrukturen ausgebildet sind und/oder die periodische verlaufende Zahnflankenkorrektur dieser Zähne, insbesondere bezüglich der Periodenlänge T und/oder eines Phasenversatzes zwischen diesen Zähnen, im Wesentlichen unterschiedlich ausgeformt ist. Durch die Erhöhung des weißen Rauschens im vom Zahn des Verzahnungselements abgestrahlten Körperschall mit Hilfe der Mikrostrukturen ist eine Reduzierung von für den Menschen störenden Geräuschemissionen in Drehmomentübertragungseinrichtungen ermöglicht.

In einer weiteren Ausführungsform ist eine Zahnteilung des Verzahnungselements in Umfangsrichtung veränderlich. Das heißt ein Abstand zwischen zwei Zähnen in Umfangsrichtung kann sich unterscheiden. Der Unterschied in Umfangsrichtung beträgt beim Umfangswinkel insbesondere weniger als 1°. Ein periodisches Geräuschverhalten kann dadurch reduziert werden, wodurch das Frequenzspektrum im abgestrahlten Körperschall und damit auch das Ausmaß an weißem Rauschen erhöht werden kann.

Insbesondere weisen die Zahnflanken mit unterschiedlich ausgeformten Mikrostrukturen eine im Wesentlichen gleiche mittlere Rauheit Rₐ und/oder eine im Wesentlichen gleiche quadratische Rauheit R_{q} aufweisen. Dadurch ist es möglich, dass einander nachfolgende Zähne des Verzahnungselements ein zumindest leicht unterschiedliches Geräuschverhalten aufweisen. Insbesondere bei hohen Drehzahlen, wenn sich die zeitlich nachfolgenden Verzahnungseingriffe schnell abwechseln, kann dadurch das Ausmaß an weißem Rauschen weiter erhöht werden.

Ein weiterer Aspekt der Erfindung betrifft ein Windkraftgetriebe für eine, insbesondere in bewohntem Raum aufgestellte, Windkraftanlage, mit mindestens einem Verzahnungselement, das wie vorstehend beschrieben aus- und weitergebildet sein kann. Durch die Erhöhung des weißen Rauschens im vom Zahn abgestrahlten Körperschall mit Hilfe der Mikrostrukturen ist eine Reduzierung von für den Menschen störenden Geräuschemissionen in dem Windkraftgetriebe ermöglicht. Dadurch ist es möglich eine Windkraftanlage näher zu einem bewohnten Raum zu positionieren, ohne hierbei die Bewohner und Bewohnerinnen durch als Lärm empfundenen Schall zu stören. Dies ermöglicht es die Anzahl an Inland-Windkraftanlagen auch in besiedelten Gebieten zu erhöhen und den Anteil an regenerativ erzeugter Energie im Energiemix einer Region zu erhöhen, ohne dass dadurch die Anwohner und Verbraucher gestört werden. Insbesondere kann dadurch der Anteil an lokal erzeugter Energie für benachbarte Verbraucher erhöht werde, wodurch Leistungsverluste infolge einer Energieübertragung über große Strecken vermieden werden können.

Ein weiterer Aspekt der Erfindung betrifft ein Verfahren zur Herstellung eines Zahns, der wie vorstehend beschrieben aus- und weitergebildet sein kann, und/oder eines Verzahnungselements, das wie vorstehend beschrieben aus- und weitergebildet sein kann, bei dem ein Zahn, der auf einer genormten Zahnform beruht, an mindestens einer Zahnflanke mit einer periodisch verlaufenden Zahnflankenkorrektur und einer die Zahnflankenkorrektur überlagernden räumlichen Mikrostruktur versehen wird, wobei die Zahnflankenkorrektur durch ein mechanisches spanabhebendes Verfahren, insbesondere Schleifen, Polieren und/oder Honen, erzeugt wird. Die Zahnflankenkorrektur kann in herkömmlicher Weise erfolgen, ohne dass die Erzeugung der Mikrostrukturen hierauf einen negativen Einfluss hat. Durch die Erhöhung des weißen Rauschens im vom Zahn abgestrahlten Körperschall mit Hilfe der Mikrostrukturen ist eine Reduzierung von für den Menschen störenden Geräuschemissionen in Drehmomentübertragungseinrichtungen ermöglicht.

Vorzugsweise werden die Mikrostrukturen zeitlich nach der Erzeugung der Zahnflankenkorrektur erzeugt. Zusätzlich oder alternativ kann die Erzeugung der Grundform des Zahns und die Erzeugung der Zahnflankenkorrektur zumindest teilweise gleichzeitig erfolgen. Dies ermöglicht es in Massenproduktion Zähne mit Zahnflankenkorrektur herzustellen und nur für diejenigen Anwendungsfälle, in denen eine Lärmbelästigung von Menschen durch abgestrahlten Körperschall drohen könnte, in einem zusätzlichen Veredelungsschritt die Mikrostruktur zu erzeugen. In Anwendungsfällen, in denen eine Lärmbeeinträchtigung von Menschen nicht zu befürchten ist, beispielsweise bei für Offshore-Windkraftanagen vorgesehenen Windkraftgetrieben, kann der Veredelungsschritt der Erzeugung von Mikrostrukturen eingespart werden. Dies ermöglicht eine kosteneffiziente Herstellung.

Besonders bevorzugt werden die Mikrostrukturen durch Prägen, Laserbearbeitung und/oder Erodieren erzeugt. Beim Prägen können in die nach der Zahnflankenkorrektur vorliegende Oberfläche der Zahnflanke Strukturen mechanisch erzeugt werden, beispielsweise durch Stechen, Ritzen, Rändeln und/oder Anpressen beziehungsweise Abwälzen einer Negativform der Mikrostruktur. Insbesondere durch eine Laserbearbeitung kann durch einen punktuellen Energieeintrag ein Teil aus der Oberfläche der Zahnflanke entfernt werden, beispielsweise durch Verdampfen. Über eine geeignete Fokussierung eines Laserstrahls kann leicht die Größe und/oder die Tiefe sowie gegebenenfalls der lokale Energieeintrag eingestellt werden.

Mit Hilfe der Laserbearbeitung sind nahezu beliebige Formgestaltungen und Verteilungen von Maxima und Minima für die Mikrostruktur erzeugbar. Beim Erodieren kann beispielsweise durch Funken-Erosion mit Hilfe eines lokal begrenzten Energieeintrags ein Teil des Materials des Zahns aus der Oberfläche der Zahnflanke entfernt werden. Bei der chemischen Erosion kann dies durch eine chemische Reaktion, beispielsweise durch Ätzen erfolgen.

Ein weiterer Aspekt der Erfindung betrifft ein Computerprogrammprodukt umfassend Befehle, die bei der Ausführung des Programms durch eine Datenverarbeitungseinrichtung einer Werkzeugmaschine diese veranlassen, das Verfahren, das wie vorstehend beschrieben aus- und weitergebildet sein kann, auszuführen. Durch die Erhöhung des weißen Rauschens im vom Zahn abgestrahlten Körperschall mit Hilfe der Mikrostrukturen ist eine Reduzierung von für den Menschen störenden Geräuschemissionen in Drehmomentübertragungseinrichtungen ermöglicht.

Ein Aspekt betrifft ferner ein Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in dem Zahn, der wie vorstehend beschrieben aus- und weitergebildet sein kann, oder in dem Verzahnungselement, das wie vorstehend beschrieben aus- und weitergebildet sein kann, vorgesehenen Bestandteile, wobei die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der Bestandteile des Zahns und/oder des Verzahnungselements, insbesondere durch 3D-Druck, durchzuführen und/oder bei einer Verarbeitung durch eine Datenverarbeitungseinrichtung zur Durchführung einer technischen Simulation eine Simulation der Funktionsweise des Zahns und/oder des Verzahnungselements durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen und gegebenenfalls mit an einer real produzierten erfindungsgemäßen Vorrichtung und/oder an einem Prototyp der erfindungsgemäßen Vorrichtung ermittelten Messdaten zu vergleichen. Die Datenpakete des Datenagglomerat sind an die erfindungsgemäße Ausgestaltung der jeweiligen vorstehend beschriebenen erfindungsgemäßen Vorrichtung speziell angepasst, um die erfindungsgemäße Wechselwirkung der Bestandteile der erfindungsgemäßen Vorrichtung bei der Verarbeitung in der Datenverarbeitungseinrichtung adäquat abbilden zu können. Die Datenpakete können insbesondere räumlich verteilt gespeichert sein, aber derart aneinander angepasst sein, dass in dem Fall, dass alle Datenpakete in einer gemeinsamen Datenverarbeitungseinrichtung zusammengeführt sind, das so zusammengesetzte Datenagglomerat alle erforderlichen Daten für eine additive Fertigung und/oder eine technische Simulation mit Hilfe der Datenverarbeitungseinrichtung für die erfindungsgemäße Vorrichtung bereitstellt. Beispielsweise sind die Datenpakete jeweils separate Teile einer Datenbibliothek ("Library"), die zur Ausbildung des Datenagglomerats zusammengeführt und bezüglich ihrer relativen Abmessungen zueinander und/oder absoluten Abmessungen und/oder Werkstoffeigenschaften korrespondierend zu der jeweiligen erfindungsgemäßen Vorrichtung aneinander angepasst sind. Das Datenagglomerat kann in der Art eines sogenannten "digital twin" eine virtuelle Verkörperung der jeweiligen erfindungsgemäßen Vorrichtung darstellen, die eine virtuelle Untersuchung in Form einer Simulation oder eine reale Vergegenständlichung mit Hilfe eines additiven Fertigungsverfahrens ermöglicht. Ein derartiger digitaler Zwilling ist beispielsweise in US 2017/286572 A1 dargestellt, auf dessen Offenbarungsgehalt als Teil der Erfindung hiermit Bezug genommen wird.

Wenn die Datenverarbeitungseinrichtung der Werkzeugmaschine das Datenagglomerat verarbeitet, wird die erfindungsgemäße Vorrichtung hergestellt, so dass nach der Verarbeitung des Datenagglomerats in der Datenverarbeitungseinrichtung die erfindungsgemäße Vorrichtung, zumindest in Form eines Prototyps, erhalten wird. Insbesondere kann jeweils ein Datenpaket einen separat ausgeführten Bestandteil der jeweiligen zugeordneten erfindungsgemäßen Vorrichtung abbilden, so dass die einzelnen Bestandteile in ihrer Relativlage und/oder Relativbeweglichkeit leicht tatsächlich und/oder virtuell zusammengesetzt werden können, um die erfindungswesentlichen Wechselwirkungen zu realisieren. Insbesondere ist es möglich mit Hilfe der jeweiligen Datenpakete die verschiedenen Bestandteile der jeweiligen Vorrichtung separat und gegebenenfalls aus unterschiedlichen Materialen durch additive Fertigung zu erzeugen und nachfolgend zu einem Prototyp der jeweiligen Vorrichtung zusammenzusetzen. Die Aufteilung der Daten des Datenagglomerats auf verschiedene Datenpakete ermöglicht dadurch in einfacher Weise eine sequenzielle additive Fertigung von relativ zueinander bewegbaren Bestandteilen der jeweiligen Vorrichtung in Form eines Bausatzes ("Kit of parts"), der dazu hergerichtet ist für die erfindungsgemäße Wechselwirkung der Bestandteile des Prototyps für die Lösung des der Erfindung zu Grunde liegenden Problems nur noch sinnfällig zusammengesetzt zu werden.

Zusätzlich oder alternativ ist es möglich mit Hilfe der Datenpakete des Datenagglomerats in einer virtuellen Umgebung während einer technischen Simulation die einzelnen Bestandteile der jeweiligen Vorrichtung, ihre Wechselwirkungen, den physikalische Zustand und/oder die Veränderung physikalischer Parameter in Abhängigkeit verschiedener Randbedingungen und/oder über die Zeit der zugehörigen erfindungsgemäßen Vorrichtung zu berechnen und/oder vorherzusagen sowie für die Überprüfung, ob die erfindungsgemäße Vorrichtung auf Basis der angenommenen Ausgestaltung und unter Berücksichtigung der angenommen simulierten Einflüsse für den beabsichtigten Einsatzzweck gut genug geeignet ist, weiterzuverwenden. Wenn das Datenagglomerat von einer die Simulationsumgebung abbildender Datenverarbeitungseinrichtung verarbeitet wird, ist es möglich das Verhalten der erfindungsgemäßen Vorrichtung unter Berücksichtigung von, sich insbesondere verändernden, Randbedingungen untersuchen zu können. Dadurch ist es beispielsweise möglich Fliehkrafteffekte bei einzelnen Bestandteilen der erfindungsgemäßen Vorrichtung in Abhängigkeit von verschiedenen statischen und/oder dynamischen Lasten und/oder unterschiedlichen Betriebstemperaturen zu untersuchen, wobei derartige Simulationsergebnisse in die Erstellung eines Dauerfestigkeitsnachweis einfließen können. Vorzugsweise werden die nach der Verarbeitung des Datenagglomerats in der Datenverarbeitungseinrichtung für die Simulationsumgebung erhaltenen Simulationsergebnisse gespeichert, um diese mit an einer real produzierten erfindungsgemäßen Vorrichtung und/oder an einem Prototyp der erfindungsgemäßen Vorrichtung ermittelten Messdaten zu vergleichen. Dadurch ist es möglich die Güte der mit Hilfe des Datenagglomerats erhaltenen Simulationsergebnisse zu beurteilen und/oder, insbesondere bei besonders starken Abweichungen, Messfehler und/oder eine fehlerhafte Messung zu identifizieren. Eine zerstörungsfreie Qualitätskontrolle der erfindungsgemäßen Vorrichtung ist dadurch vereinfacht und verbessert.

Durch das Datenagglomerat ist eine kostengünstige Herstellung von Prototypen und/oder eine kostengünstige computerbasierte Simulation ermöglicht, um die Funktionsweise des Zahns und/oder des Verzahnungselements zu studieren, Probleme im konkreten Anwendungsfall zu identifizieren und Verbesserungen zu finden. Die Lösung der der Erfindung zugrunde liegenden Aufgabe kann mit Hilfe des Datenagglomerats leicht und kostengünstig überprüft werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Wenn ein dem konkreten Ausführungsbeispiel ein Merkmal in Kombination mit einem anderen Merkmal dargestellt wird, dient dies nur der vereinfachten Darstellung der Erfindung anhand des Ausführungsbeispiels und soll keinesfalls bedeuten, dass dieses Merkmal nicht auch ohne das andere Merkmal eine Weiterbildung der Erfindung sein kann, wobei der Schutzbereich der Erfindung durch die unabhängigen Ansprüche definiert wird. Es zeigen:
Fig. 1: eine schematische perspektivische Ansicht eines Zahns,
Fig. 2: eine schematische Detailansicht des Details II aus Fig. 1,
Fig. 3: eine schematische Schnittansicht des Zahns aus Fig. 2 in einer Zahnflankenabwicklung,
Fig. 4: eine schematische Schnittansicht des Zahns aus Fig. 2 in einer Zahnflankenkorrekturabwicklung,
Fig. 5: eine schematische Schnittansicht einer ersten Alternative zu dem Zahn aus Fig. 2 in einer Zahnflankenkorrekturabwicklung,
Fig. 6: eine schematische Schnittansicht einer zweiten Alternative zu dem Zahn aus Fig. 2 in einer Zahnflankenkorrekturabwicklung und
Fig. 7 a) - 1): schematische perspektivische Ansichten eines Zahns mit verschiedenen Formgestaltungen von Mikrostrukturen.

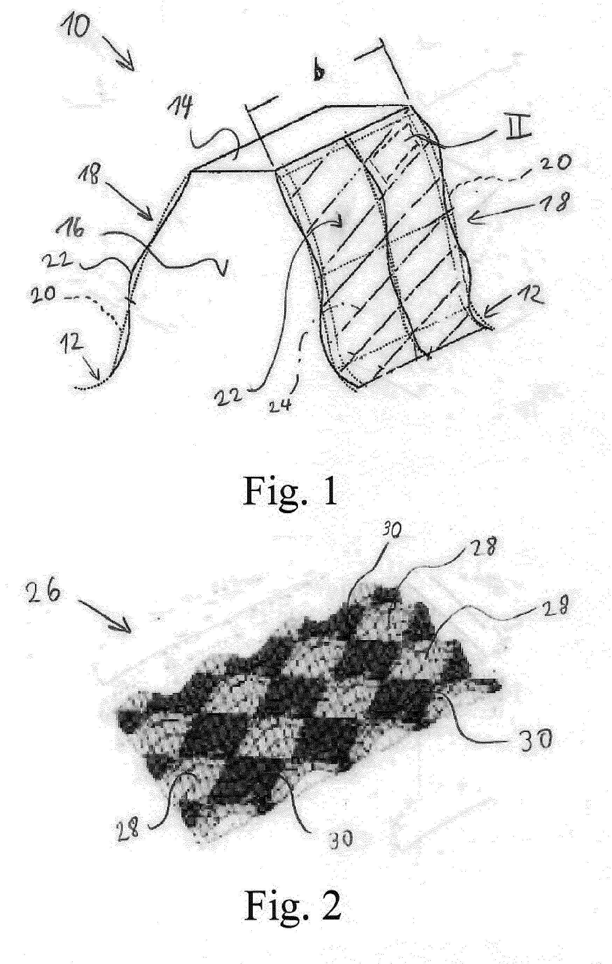

Der in Fig. 1 dargestellte Zahn 10 kann insbesondere Teil eines Zahnrads für ein Windkraftgetriebe einer (Inland-)Windkraftanlage sein, bei dem eine Beeinträchtigung von Menschen durch Lärm vermieden werden soll. Der Zahn 10 weist einen Fuß 12 auf, der mit einem scheibenförmigen Körper eines Zahnrads einstückig verbunden sein kann, sowie einen nach radial außen weisenden Kopf 14 auf. Der Fuß 12 und der Kopf 14 können über in axialer Richtung weisende Stirnfläche 16 verbunden sein. Zudem kann der Fuß 12 und der Kopf 14 über in tangentialer Richtung weisende Zahnflanken 18 verbunden sein. Im dargestellten Ausführungsbeispiel weist der Zahn 10 eine Grundform 20 auf, wie sie für eine Evolventenverzahnung verwendet wird. Mindestens eine Zahnflanke 18, vorzugsweise beide Zahnflanken 18 sind mit einer genormten Zahnflankenkorrektur 22 versehen, bei der er sich im dargestellten Ausführungsbeispiel um eine periodische verlaufende Wellenform handelt. Im dargestellten Ausführungsbeispiel verläuft eine Wellenfront der als Wellenform ausgestalteten Zahnflankenkorrektur 22 zu einer Breite b des Zahns 10 leicht angeschrägt, so dass auch durch jeweils phasengleiche Punkte der Wellenform verlaufende Geraden 24 angeschrägt verlaufen. Alternativ kann die Zahnflankenkorrektur 22 als eine beliebige Zahnflankenkorrektur 22 nach ISO 21771[:2007] ausgestaltet sein.

So wie die Grundform 20 des Zahns 10 von der Zahnflankenkorrektur 22 überlagert ist, ist wiederum die Zahnflankenkorrektur 22 von einer Mikrostruktur 26 überlagert, die in Fig. 2 im Detail dargestellt ist. In der Zahnflankenkorrekturabwicklung definiert die Zahnflankenkorrektur 22 eine Mittellinie, die als Referenz für die Formgestaltung der Mikrostruktur 26 verwendet wird. Das in Fig. 2 dargestellte Detail zeigt einen Teil der Zahnflanke 18, der sich in etwa über 90% einer Viertel-Periodendauer (T/4) der als Wellenform ausgestalteten Zahnflankenkorrektur 22 erstreckt. In dem zur vereinfachten Erläuterung in Fig. 2 dargestellten Ausführungsbeispiel der Mikrostruktur 26 sind Maxima 28 und Minima 30 in einer rechteckigen Zeilen-und-Spalten-Struktur, insbesondere schachbrettartig und/oder vergleichbar zu Kacheln, alternierend nebeneinander und hintereinander angeordnet. Alternativ kann die Mikrostruktur 26 beispielsweise nur Maxima 28, nur Minima 30 oder sowohl Maxima 28 oder auch Minima 30 aufweisen. Die Maxima 28 und Minima 30 können einer Sinusstruktur folgen, wobei die Maxima 28 und Minima 30 zueinander jeweils genau gleiche Abstände t und genau gleiche Auslenkungen a aufweisen sowie genau gleiche Flächenbereiche innerhalb der Zahnflanke 18 einnehmen. Vorzugsweise ist der Verlauf der Zeilen und Spalten der Mikrostruktur 26 zu der Wellenfront der Zahnflankenkorrektur 22 und den Gerade 24 angeschrägt ausgerichtet. Eine derartige Mikrostruktur 26 kann beispielsweise durch Einprägen einer abrollenden Negativform an der nach dem Erzeugen der Zahnflankenkorrektur 22 vorliegenden Oberfläche der Zahnflanke 18 hergestellt werden.

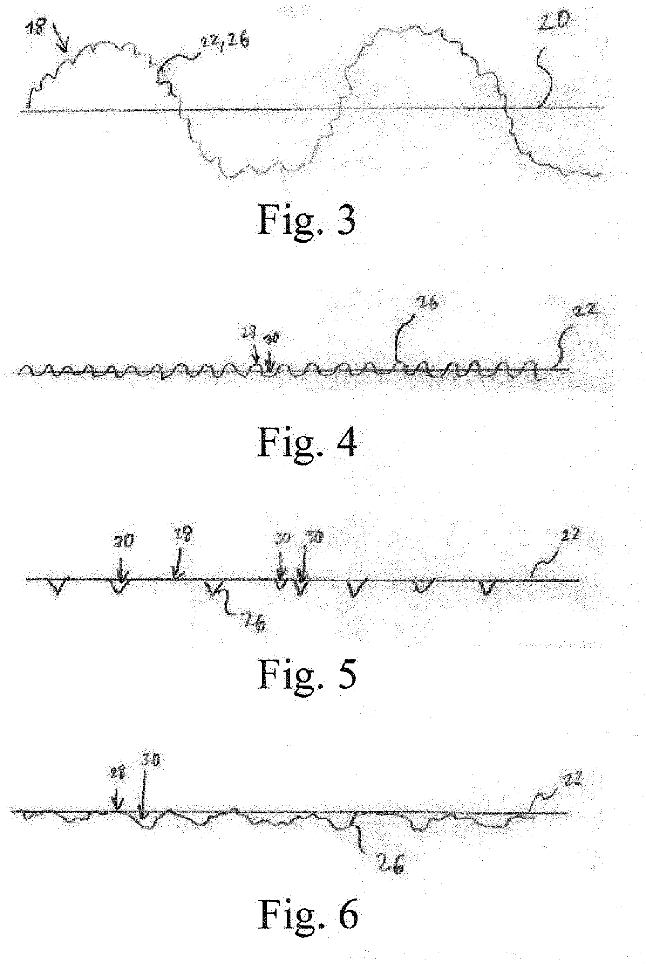

Wie in Fig. 3 dargestellt ist, ergibt sich für die Zahnflankenkorrektur 22 aufgrund der überlagerten Mikrostruktur 26 ein zittriger Verlauf, der sich durch die Interferenz der Mikrostruktur 26 mit einer deutlich geringeren Periodendauer und deutlich geringeren Amplitude im Vergleich zu der Periodendauer und Amplitude der als Wellenform ausgestalteten Zahnflankenkorrektur 22 ergibt. Wie in Fig. 4 dargestellt ist, kann die Mikrostruktur 26 einen sinusförmigen Verlauf aufweisen.

Wie in Fig. 5 dargestellt ist, kann die Mikrostruktur 26 auch einen nicht-sinusförmigen Verlauf aufweisen, beispielsweise indem die Minima 30 der Mikrostruktur 26 durch Laserbearbeitung oder Funkenerosion erzeugt wurden. Die Abstände zwischen den Minima 30 können gleich groß sein, so dass sich ein periodischer, aber kein sinusförmiger Verlauf für die Mikrostruktur ergibt. Vorzugsweise sind die Abstände zwischen den Minima 30 unterschiedlich groß und in definierten Grenzen willkürlich vorgesehen. Insbesondere ist die Tiefe der jeweiligen Minima 30 unterschiedlich. Die Maxima 28 dieser Mikrostruktur 26 können durch diejenigen Bereiche zwischen den Minima 28 definiert sein, in denen keine Materialaustrag bei der Erzeugung der Mikrostruktur 26 erfolgt ist.

Wie in Fig. 6 dargestellt ist, kann die Mikrostruktur 26 bezüglich der Position der Maxima 28 und Minima 30 sowie deren Größe und Tiefe bzw. Höhe auch stark willkürlich und stochastisch verteilt ausgeformt sein. Eine derartige Mikrostruktur 26 kann beispielsweise durch chemische Erosion, beispielsweise durch Ätzen, erzeugt sein.

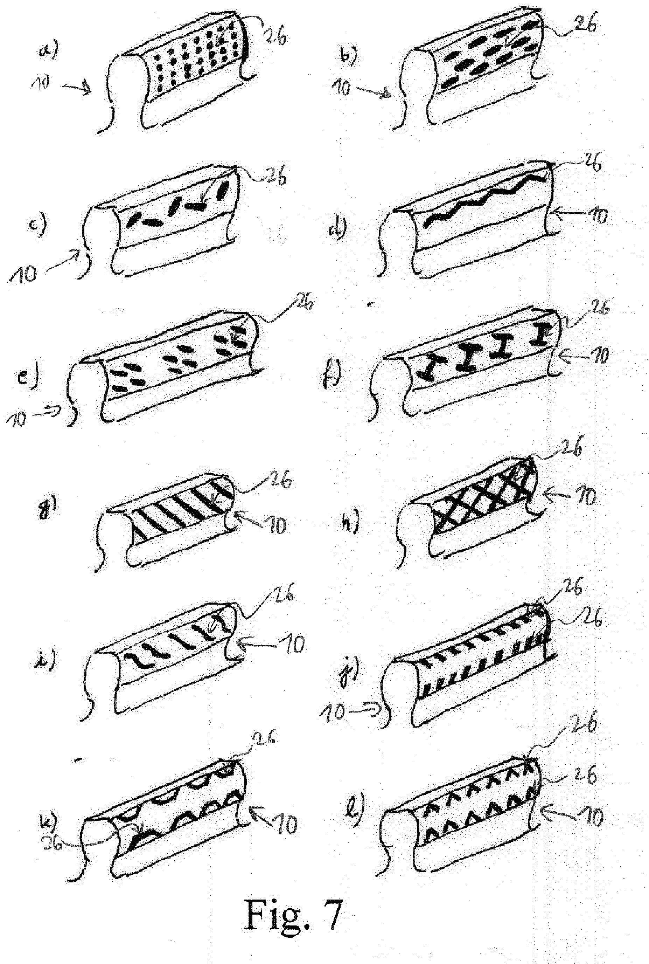

Wie in Fig. 7 a) - 1) dargestellt, kann die Mikrostruktur 26 viele verschiedene Formgestaltungen und/oder Muster aufweisen. Der jeweilige Zahn 10 kann insbesondere mit oder auch ohne Zahnflankenkorrektur 22 nach ISO 21771 [:2007] ausgeführt sein. Die jeweilige Mikrostruktur 26 kann beispielsweise nur Maxima 28, nur Minima 30 oder sowohl Maxima 28 oder auch Minima 30 aufweisen, wobei die Maxima 28 und Minima 30 insbesondere alternierend zueinander angeordnet sein können. Es ist aber auch möglich, dass der kürzeste Abstand t durch zwei nachfolgende Maxima 28 und/oder Minima 30 definiert ist.

## Patentansprüche

1. Zahn (10) für eine verzahnte Drehmomentübertragungsanordnung, mit
einer Zahnflanke (18) zum Drehmomentaustausch mit einer Gegenflanke eines Verzahnungspartners,
wobei die Zahnflanke (18) eine periodische verlaufende Zahnflankenkorrektur (22) mit einer örtlich verlaufenden Periodenlänge T aufweist,
wobei die periodische Zahnflankenkorrektur (22) mit einer räumlichen Mikrostruktur (26) überlagert ist, wobei die Mikrostruktur (26) lokale Maxima (28) und/oder lokale Minima (30) sowie einen kürzester Abstand t von t < T/2 zwischen den lokalen Maximum (28) und/oder dem lokalen Minima (30) aufweist.

2. Zahn (10) nach Anspruch 1, wobei 0,00005 ≤ t/T ≤ 0,49, insbesondere 0,0001 ≤ t/T ≤ 0,05, bevorzugt 0,0005 ≤ t/T ≤ 0,01 und besonders bevorzugt 0,001 ≤ t/T ≤ 0,005 gilt.

3. Zahn (10) nach Anspruch 1 oder 2, wobei die Zahnflankenkorrektur (22) eine Amplitude A in Richtung einer Flächennormalen der Zahnflanke (18) und die Mikrostruktur (26) zu einer Mittellinie der Zahnflankenkorrektur (22) eine Auslenkung a in Richtung einer Flächennormalen der Zahnflanke (18) aufweist, wobei 0,00005 ≤ a/A ≤ 0,50, insbesondere 0,0001 ≤ a/A ≤ 0,10, bevorzugt 0,0005 ≤ a/A ≤ 0,05 und besonders bevorzugt 0,001 ≤ a/A ≤ 0,01 gilt.

4. Zahn (10) nach einem der Ansprüche 1 bis 3, wobei die Zahnflankenkorrektur (22) und die Mikrostruktur (26) sich sowohl in Breitenrichtung (b) als auch in Längsrichtung der Zahnflanke (18), insbesondere der gesamten Zahnflanke (18), flächig gleichartig erstrecken.

5. Zahn (10) nach einem der Ansprüche 1 bis 4, wobei ein Verlauf der Mikrostruktur (26) über die Zahnflankenkorrektur (22) aperiodisch, insbesondere willkürlich und/oder stochastisch verteilt, ausgeformt ist.

6. Zahn (10) nach einem der Ansprüche 1 bis 5, wobei bei einem Vergleich eines Zahns (10) mit Mikrostrukturen (26) mit einem ansonsten identischen Zahn (10) ohne Mikrostrukturen (26) eine Fast-Fourier-Transformation eines von dem Zahn (10) mit Mikrostrukturen (26) abgegeben Körperschalls bei einer ansonsten identischen Drehmomentübertragung in derselben verzahnten Drehmomentübertragungsanordnung im Bildbereich der Fast-Fourier-Transformation eine größere Bandbreite der Frequenzmaxima aufweist.

7. Zahn (10) nach einem der Ansprüche 1 bis 6, wobei die Zahnflanke (18) auf einer geradeverzahnten oder schrägverzahnten Grundform (20) für eine Evolventenverzahnung oder einer Zykloidenverzahnung beruht.

8. Verzahnungselement, insbesondere Zahnrad oder Zahnstange, für eine verzahnte Drehmomentübertragungsanordnung mit einer Mehrzahl an Zähnen (10) nach einem der Ansprüche 1 bis 7, wobei für mindestens eine Zahnflanke (18) verschiedener Zähne (10) bezüglich ihres Abstands t und/oder ihrer Auslenkung a unterschiedlich ausgeformte Mikrostrukturen (26) ausgebildet sind und/oder die periodische verlaufende Zahnflankenkorrektur (22) dieser Zähne (10), insbesondere bezüglich der Periodenlänge T und/oder eines Phasenversatzes zwischen diesen Zähnen (10), im Wesentlichen unterschiedlich ausgeformt ist.

9. Verzahnungselement nach Anspruch 8, wobei die Zahnflanken (18) mit unterschiedlich ausgeformten Mikrostrukturen (26) eine im Wesentlichen gleiche mittlere Rauheit Rₐ und/oder eine im Wesentlichen gleiche quadratische Rauheit R_{q} aufweisen.

10. Windkraftgetriebe für eine, insbesondere in bewohntem Raum aufgestellte, Windkraftanlage, mit mindestens einem Verzahnungselement nach Anspruch 8 oder 9.

11. Verfahren zur Herstellung eines Zahns (10) nach einem der Ansprüche 1 bis 7 und/oder eines Verzahnungselements nach Anspruch 8 oder 9, bei dem
ein Zahn (10), der auf einer genormten Zahnform (20) beruht, an mindestens einer Zahnflanke (18) mit einer periodisch verlaufenden Zahnflankenkorrektur (22) und einer die Zahnflankenkorrektur (22) überlagernden räumlichen Mikrostruktur (26) versehen wird,
wobei die Zahnflankenkorrektur (22) durch ein mechanisches spanabhebendes Verfahren, insbesondere Schleifen, Polieren und/oder Honen, erzeugt wird.

12. Verfahren nach Anspruch 11, bei dem die Mikrostrukturen (26) zeitlich nach der Erzeugung der Zahnflankenkorrektur (22) erzeugt werden.

13. Verfahren nach Anspruch 11 oder 12, bei dem die Mikrostrukturen (26) durch Prägen, Laserbearbeitung und/oder Erodieren erzeugt werden.

14. Computerprogrammprodukt umfassend Befehle, die bei der Ausführung des Programms durch eine Datenverarbeitungseinrichtung einer Werkzeugmaschine diese veranlassen, das Verfahren nach einem der Ansprüche 11 bis 13 auszuführen.

15. Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in dem Zahn (10) nach einem der Ansprüche 1 bis 7 und/oder in dem Verzahnungselement nach Anspruch 8 oder 9 vorgesehenen Bestandteile, wobei
die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der Bestandteile des Zahns (10) und/oder des Verzahnungselements, insbesondere durch 3D-Druck, durchzuführen,
und/oder
bei einer Verarbeitung durch eine Datenverarbeitungseinrichtung zur Durchführung einer technischen Simulation eine Simulation der Funktionsweise des Zahns (10) und/oder des Verzahnungselements durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen.
